# EUROPEAN PATENT SPECIFICATION

(11) **EP 2 561 921 B1**
(45) Date of publication and mention of the grant of the patent: **22.03.2017**
(21) Application number: 12177960.7
(22) Date of filing: 26.07.2012
(51) Int. Cl.: B01D 53/86, C01B 17/76, F01K 17/02, F22B 37/00, F23J 15/08

(54) **Process for removal of NOx and SO2 in flue gas boilers**
Verfahren zum Entfernen von NOx und SO2 aus Rauchgaskesseln
Procédé d'élimination de NOx et de SO2 des gaz combustibles des chaudières

(30) Priority: 23.08.2011 DK 201100636
(43) Date of publication of application: 27.02.2013
(73) Proprietor: Haldor Topsøe A/S, 2800 Kgs. Lyngby (DK)
(72) Inventor: SCHOUBYE, Peter, 2970 Hørsholm (DK)
(74) Representative: Haldor Topsøe A/S

(56) References cited:
- US-A- 3 607 034
- US-A- 4 470 449
- US-A- 4 562 795
- US-A- 5 554 350

## Description

The present invention relates to the improvement of a known process called the SNOX^{™} process for desulfurization and NOx-removal of flue gases from combustion of sulfurous fuels such as petroleum coke (petcoke), heavy fuel oil or high sulfur coal in boilers generating steam at pressures above 60 bar, typically in the range 100-350 bar for power production. In the process, the flue gas from the boiler is heated to about 390°C upstream a catalytic reactor in which the NOx is reduced by NH₃ to N₂ and the SO₂ is oxidized to SO₃, where after the SO₃-rich gas is cooled to 230-250°C and the SO₃ is hydrated to H₂SO₄ vapor upstream a falling film condenser in which the H₂SO₄ vapor and remaining SO₃ is selectively condensed as concentrated sulfuric acid in air cooled glass tubes cooled by the boiler combustion air. According to the present invention high pressure boiler feed water from the power plant is used as heat exchange medium in the desulfurization process, thereby increasing the thermal efficiency of utilization in the power plant of the heat produced and reducing operating and capital costs of the desulfurization process, without compromising the high degree of SOx and NOx removal.

The conversion of SO2 to SO3 and then to sulfuric acid is described in UK Pat. Appl. GB 2,117,368 and US Pat. 5,108,731. US Pat. 4,781,902 describes a process for the elimination of nitrogen oxides and sulfur oxides from a flue gas.

US 4 562 795 A disclosing a process for removal of Sox in flue gas from a boiler comprising the steps of heating the flue gas upstream a catalytic reactor; oxidizing SO2 in the flue gas to SO3 in said catalytic reactor with at least one catalyst pass operating at temperatures in the range of 400-500 °C; cooling the oxidized, SO3 - rich flue gas to a temperature above the H2SO4 dew point of the flue gas by heat exchange with a stream of water in a separate boiler train; further cooling the SO3 -rich flue gas in an air cooled condenser, thereby condensing and withdrawing said SO3 as H2SO4 and producing hot air and a cleaned flue gas.

It is a disadvantage of the known process for removal of NOx and SOx that it requires a boiler with separate steam system to cool the SO₃-gas upstream the sulfuric acid condenser.

It is a more serious disadvantage, particularly when the SO₃-gas contains more than 0.4% SO₃, that the heat recovered in saturated steam cannot be used in the process.

These technical disadvantages and other technical problems as described below are solved by the present invention, the features of which are defined in claim 1.

Preferred embodiments are defined in the dependent claims.

As used herein the term "pressurized water at a pressure above 60 bar" means boiler feed water (BFW) used for the production of superheated steam from the boiler.

As used herein the term "cleaned gas" means a gas containing less than 150 ppmv SOx, preferably less than 100 ppmv and less than 30 ppmv NOx, preferably less than 25 ppmv NOx. The term "SOx" means SO2 or SO3 or a combination of both while the term "NOx" means NO or NO2 or a combination of both.
Fig. 1 illustrates a process according to the invention with 0.99% SO₃ after two-stage SO₂-conversion and sufficient support fuel (12,000 kg H₂S/h) to avoid use of gas-gas heat exchanger.
Fig. 2 illustrates a process according to the invention with 0.59% SO₃ after SO₂-conversion with 5000 kg/h H₂S support fuel and use of relatively small gas-gas heat exchanger for the cooling of the SO3-rich flue gas.
Fig. 3 illustrates the process according to the prior art with methane or H₂S as support fuel and larger gas-gas heat exchanger with respect to Fig. 2.
Tables 3,4, 5 and 6 provides flow data and concentrations for 4 exemplary cases according to the 3 figures, as described further below. Furthermore Table 7 provides data relating to temperatures and support fuels for all figures.

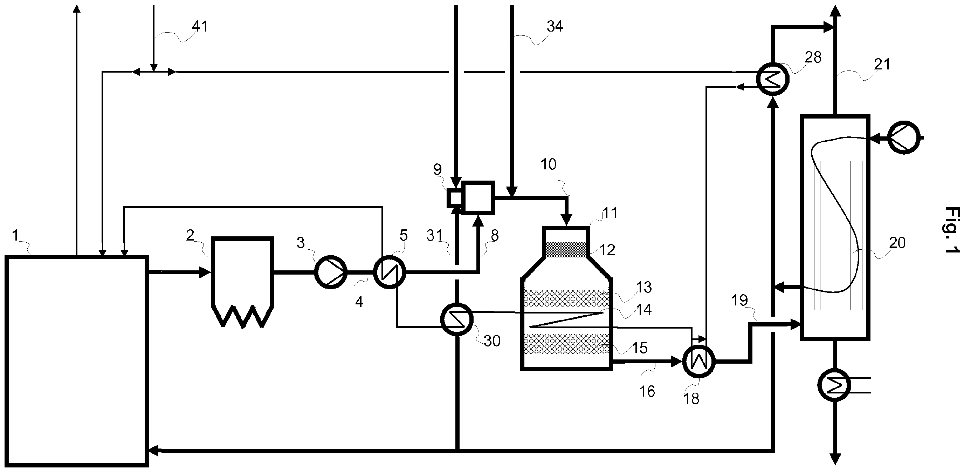

The improved process, as seen in Fig. 1, is in particular suited for treatment of flue gas with up to 2% SO₂ from boilers burning high sulfur petroleum residuals such as residual fuel oil and petroleum coke and so-called sour gases comprising H₂S and NH₃ which may be burned as support fuel in a SNOX process. In the improvement according to the invention, a split stream of boiler feed water (BFW) 41 for the production of high pressure steam in the boiler is diverted at its full pressure through the SNOX plant where it is used for cooling the SO₃-rich gas in the SO₃-gas cooler 18 upstream the air cooled acid condenser 20, followed by further heating of the BFW in the intermediate SO₃-gas cooler 14 in the catalytic reactor 11 and subsequently BFW is used to pre-heat combustion air 31 in heat exchanger 30 and to pre-heat the flue gas 4 in the heat exchanger 5, before the split stream of BFW is returned to the boiler 1. The flue gas can only be heated to 5 to 10°C below the boiling point of the BFW. Thus, with BFW at for instance 120 bar, the flue gas can be heated to max. 310°C in 5; the additional heating of the preheated gas 8 to reach inlet 385-390°C to the catalytic reactor is done by burning support fuel in the combustion chamber 9 upstream the reactor.

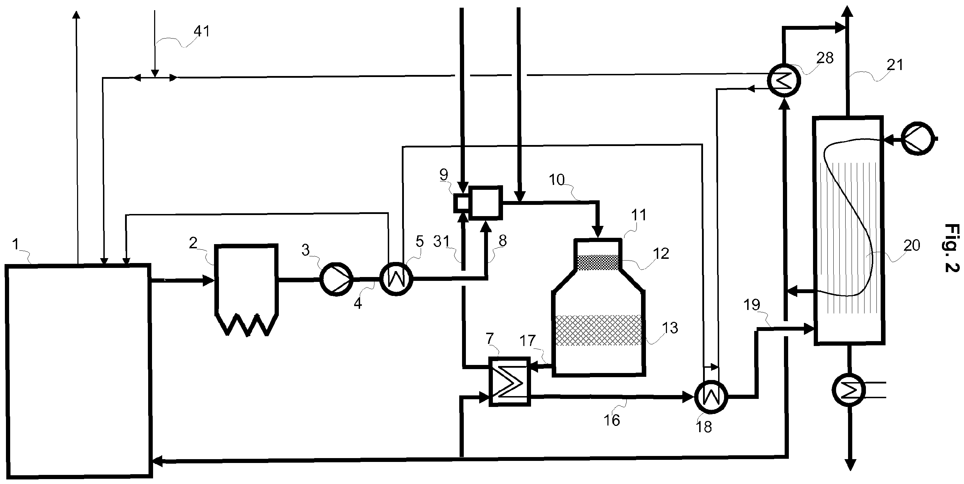

In the process of Fig. 1 the amount of support fuel (H₂S) being burned is more than sufficient to heat the flue gas to 390°C after pre-heating it with the hot BFW in the heat exchanger 5. In the embodiment of the process of Fig. 2, the amount of support fuel is lower and not sufficient to heat the flue gas by 75-80°C so that the heating of the flue gas must be supplemented by heat transferred in the gas-gas heat exchanger 7 from the catalytic reactor effluent gas 17.

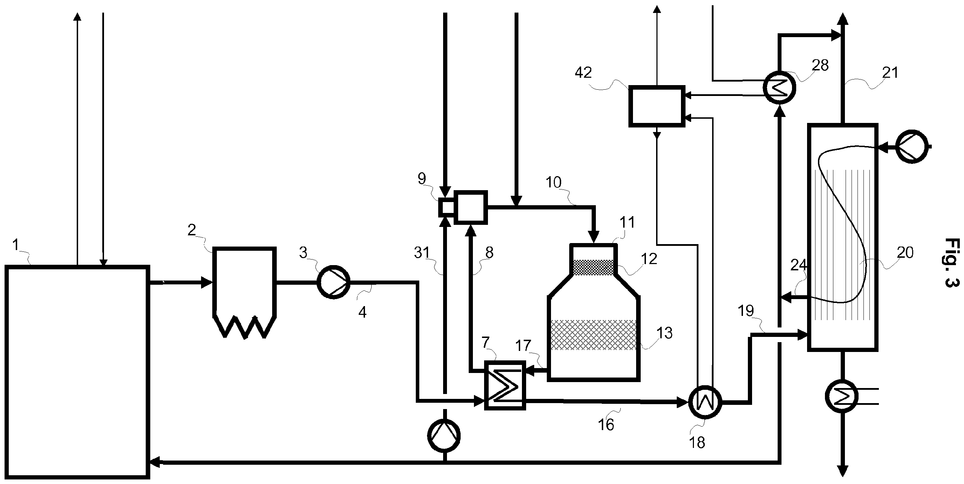

The prior art process applied on flue gas from combustion of petroleum coke with 5% sulfur is seen in Fig. 3, corresponding to Case 3 with methane used as support fuel, and Case 4 with the same amount of H₂S used as support fuel as in Fig. 2. The flue gas leaves the boiler 1 typically at 200-210°C. Dust and fly ash is removed in the dust filter (electrostatic precipitator) 2 followed by the flue gas fan 3 and heating of the gas from 210-225°C after the fan to 355-380°C after the gas-gas heat exchanger 7. The flue gas is then further heated to 380-400 °C (temperature in line 10 to catalytic reactor 11) by combustion of fuel gas with additional air in the direct gas-fired heater 9. The flue gas, which may contain up to 0.6% SO₂ depending on the content of SO₂ in the boiler flue gas and the amount of H₂S in the support fuel gas, is then mixed with ammonia in molar NH₃:NOx ratio 1:1 and passed through the bed 12 of catalyst for reduction of NOx by NH₃ to N₂ followed by the catalyst bed 13 of sulfuric acid catalyst in which up to 99% of SO₂ is oxidized to SO₃ whereby the gas 17 reaches a temperature of typically 400-410°C upstream the gas-gas heat exchanger 7 in which the gas is cooled upstream the gas-cooler/boiler 18 in which the gas is further cooled to a temperature which is preferably about 30°C above its H₂SO₄ dew point T_{d} (see table 1), before the gas enters the air-cooled sulfuric acid condenser.

The temperature of the flue gas in line 16 after the gas-gas heat exchanger 7 is determined by the heat balance across the gas-gas heat exchanger 7 and increases with increasing heat produced in the combustion chamber and by the reactions taking place in the reactor and shown in Table 2. The temperature in line 16 is usually higher than the economically optimal value of the inlet temperature (line 19) to the air cooled sulfuric acid condenser so that the gas should be cooled upstream the condenser in optimal application of the process, in particular when the gas contains >0.3% SOx.

The economically optimal value in line 19 is 30-35°C above the H₂SO₄ dew point (T_{d}) of the gas which depends on the temperature, pressure and nominal concentration of SO₃ and H₂O in the gas. As used herein Nominal means that the concentrations of SO₃ and H₂O are calculated on the assumption of no hydration of SO₃. The gas phase hydration of SO₃ is in equilibrium so that most of the SO₃ is actually present as H₂SO₄ vapor at the inlet to the acid condenser. Values of T_{d} as function of the temperature and the nominal partial pressures of SO₃ and H₂O are shown in Table 1. If the gas contains f. ex. nominally 0.4 % SO₃ + 9 % H₂O, T_{d} is 205°C so that the optimal inlet temperature to the condenser in line 19 is 235-240°C. If the inlet temperature is higher than that, the condenser will be larger and produce more excess air; if the inlet temperature is lower, the upstream SO₃-gas cooler may be corroded. The SO₃-gas cooler 18 according to the prior art is a boiler producing saturated steam at boiling point which must be 10-15°C above T_{d} in order to avoid risk of corrosion of the boiler tubes. Therefore, the boiler 18 for cooling of the SO₃-gas generates saturated steam at pressures in the range 18-26 bar g.

| Table 1 | | | | |
|---|---|---|---|---|
| p_{SO3} mbar | p_{H2O} mbar | H₂SO₄ dew point Td, °C | Optimal temp. of cooler tubes °C | Corresponding boiler pressure |
| 2 (0.2 vol %) | 60 (6 vol %) | 190.3 | 205 | 16 bar g |
| 2 | 120 | 196.0 | 210 | 18 |
| 4 | 60 | 202.7 | 215 | 20 |
| 4 | 120 | 207.8 | 220 | 23 |
| 8 | 60 | 216.1 | 230 | 28 |
| 8 | 120 | 221.2 | 235 | 30 |
| 12 | 60 | 224.2 | 240 | 32.5 |
| 12 | 120 | 229.5 | 245 | 36 |

It is a disadvantage of the known process, such as in Fig. 3, that it requires a boiler 42 with separate steam system to cool the SO₃-gas upstream the condenser.

In contrast to the present invention, in the prior art process the heat recovered in saturated steam at pressures in the range seen in Table 1 cannot be used in practice for pre-heating the flue gas upstream the gas-gas heat exchanger 7. This is a significant disadvantage, in particular when the SO₃-gas contains more than 0.4% SO₃.

It is desirable to pre-heat the inlet gas for two reasons:
Firstly because the inlet temperature to of the SO₂-gas to the gas-gas heat exchanger 7 must be at least 10-15°C above the T_{d} of the SO₃ gas in order to avoid risk of corrosion on the SO₃-gas side of the gas-gas heat exchanger.
Secondly, pre-heating of the gas upstream the gas/gas heat exchanger 7 is necessary also in order to reduce the need for fuel gas to heat the SO₂-gas to reach 390°C upstream the reactor. Pre-heating of the flue gas makes it possible to compensate the need for fuel gas adjusting the degree of preheating the SO₂-gas.

The temperature of the saturated steam generated in the gas cooler 18 is too low to be suitable for pre-heating the flue gas upstream the gas/gas heat exchanger 7, and even if the steam were super-heated by heat exchange with the gas in an additional heat exchanger installed upstream the gas-cooler/boiler 18, the heat capacity of the stream of super-heated steam would be far too low to provide sufficient pre-heating of the gas upstream the gas/gas heat exchanger 7.

Hence, the only way to increase the inlet temperature to 7 with the process of prior art is to increase the temperature of the flue gas exiting the boiler 1, but that will restrict the freedom of operation of the boiler, decrease the efficiency of the electrostatic precipitator (ESP) 2 and increase the power consumption of the flue gas fan 3.

The above described disadvantages of the prior art process are avoided by the process of the invention as illustrated in Case 1 (Fig. 1) and Case 2 (Fig. 2). In both cases, 85 t/h petroleum coke with 5% sulfur is burned in the boiler generating about 931,663 Nm³/h flue gas with 0.32% SOx and 3.63% O₂ entering the process at a temperature of 215°C in line 4 after the flue gas fan 3. In Case 1, 12 t/h H₂S is burned as support fuel whereby the SOx concentration is increased to 0.99% SO₃ after 2-stage SO₂-conversion. In case 2, 5 t/h H₂S is burned thereby increasing the SO₃-concentration to 0.59% after SO₂-conversion (in one stage).

The process of the invention differs from the prior art process by the use of the boiler feed water (BFW) at its full pressure preferably at 100-250 bar, more preferably 100-200 bar, as medium of cooling and heat displacement in the process. In both of the present cases, the BFW is imported (after de-aeration) at 116 bar abs and 135°C.

In the process of the invention, a split stream of the BFW for the production of high pressure steam in the boiler is diverted through the SNOX plant at its full pressure which is boosted by about 5 bar before it is heated, first by 5-10°C by recovering heat in the heat exchanger 28 from the excess air from the Wet Sulfuric Acid Condenser (WSAC) condenser 20 before being used for cooling the SO₃-rich gas in the SO₃-gas cooler 18 upstream the air cooled acid condenser 20. The temperature of the BFW is adjusted to typically 15°C above the H₂SO₄ dew point of the process gas (see Table 1) upstream the gas-cooler/boiler 18, typically as seen in Fig. 1 and 2 by recycling heated BFW to the inlet of 18.

In Case 1, where 40% of the total amount of 1010 t/h of BFW is diverted through the SNOX plant, the split stream of BFW is further heated in the intermediate SO₃-gas cooler 14 in the catalytic reactor 11 and then used to pre-heat the fuel gas combustion air in heat exchanger 30 and the flue gas in heat exchanger 5, before the split stream of BFW is returned to the boiler.

In Case 2, 16% of the total BFW (975 t/h) is diverted to the SNOX plant where it, after heating in the excess air cooler 28 and the SO3 gas cooler 18 is passed directly to the gas pre-heater 5 before being returned to the boiler.

In the flue gas pre-heater 5, the flue gas can be heated to maximum 5°C below the boiling point of the BFW. Thus, the higher the BFW pressure, the more heat can be displaced from cooling the SO₃-gas to pre-heating the gas upstream the reactor. With BFW at 120 bar, the gas can be heated to max. 320°C in 5; the additional heating of the gas to reach inlet 390°C to the catalytic reactor is done by burning support fuel in the combustion chamber 9 upstream the reactor.

In Case 1, the heating in 5 and the heat generated by the combustion of fuel gas is amply sufficient to reach 390°C upstream the rector; in Case 2, use of a gas-gas heat exchanger 7 is necessary to reach 390°C but this heat exchanger will be much smaller than required in the corresponding case with the process of prior art seen in fig 3, with case data according to table 6 (also with 5000 kg/h H₂S support fuel), or the temperature of the flue gas exiting the boiler according to the invention will be lower. Specifically, in order to obtain the desired inlet temperature to heat exchanger 7, in the prior art process of Case 4 the temperature of the flue gas exiting the boiler 1 is 10°C higher than in Case 2 (Fig. 2, present invention). This increase in temperature of the flue gas exiting the boiler, although apparently small restricts the freedom of operation of the boiler, decrease the efficiency of the electrostatic precipitator and increase the power consumption of the flue gas fan downstream.

By using water at high pressure as medium for heat displacement inside the SNOX process and for transfer to the boiler of heat generated in the process, the process of the invention can also treat flue gases with up to 2% SO₃ after SO₂-conversion in up to 3 stages with inter cooling by the split stream of BFW and operate without limitations in the temperature of the flue gas exiting the boiler.

The invention thus takes advantage of the realization that boiler feed water at high pressure can be heated and that the higher the pressure of the water the more it is possible to preheat the flue gas from the boiler. Accordingly the invention results in lower capital costs, particularly because of the need of a much smaller gas heat exchanger (7), as well as higher energy utilization (energy efficiency) in the process. The invention also reduces the requirements for support fuel, since the flue gas may be pre-heated by the boiler feed water at high pressure, i.e. pressurized water at a pressure above 60 bar, preferably 100-250 bar. The invention enables the operation of the plant without restricting the freedom of operation of the boiler, without decreasing the efficiency of the electrostatic precipitator and without increasing the power consumption of the fan used to drive the flue gas. Further, because pre-heating in heat exchanger 5 of the flue gas becomes possible, a higher temperature in the flue gas can be obtained thereby reducing the risk of condensed sulfuric acid in gas-gas heat exchanger 7 located downstream.

| Table 2. Chemical reactions in the process | |
|---|---|
| Location in process | reactions |
| Combustion chamber 9 | Combustion of support fuel comprising hydrocabons, H2S, NH3 and possibly sulfur into, CO2, H2O, SO2 and N2 |
| DeNOx catalyst in the reactor | NO + NH3 + 0.25 O2 = N2 + 1.5 H2O +23.4 MJ/kg NH3 |
| SO2 oxidation catalyst in the reactor | SO2 + 0.5 O2 = SO3 +3.1 MJ/kg S |
| Gas phase hydration of SO3 in 18 | SO3 + H2O = H₂SO₄ (vap) + 3.05 MJ/kg S |
| Acid condensation in 20 | H2SO4 (vap) => 95% H2SO4 (liq, 200°C) + 1.85 MJ/kg S |

**Table 3**

| | 4 | 11 | 16 | 21 |
|---|---|---|---|---|
| O₂ | 3.63% | 5.00% | 4.53% | 4.63% |
| H₂O | 5.79% | 5.94% | 5.98% | 4.95% |
| CO₂ | 14.47% | 12.30% | 12.36% | 12.63% |
| SO2 | 0.314% | 0.986% | 0.0112% | 0.0119% |
| SO3 | | 0.0030% | 0.960% | |
| H2SO4 | 0.0050% | 0.0020% | 0.0240% | 10 ppm |
| NO_{X} | 0.0300% | 0.0260% | 20 ppm | 30 ppm |
| NH3 | | 0.0260% | | |
| Flow kNm³/h | 932 | 1096 | 1090 | 1067 |

**Table 4**

| | 4 | 11 | 16 | 21 |
|---|---|---|---|---|
| O₂ | 3.63% | 5.08% | 4.80% | 4.86% |
| H₂O | 5.79% | 5.66% | 5.71% | 5.07% |
| CO₂ | 14.47% | 12.80% | 12.83% | 13.00% |
| SO₂ | 0.3135% | 0.589% | 0.0092% | 94 ppm |
| SO₃ | | 0.0050% | 0.577% | |
| H₂SO₄ | 0.0050% | | 0.0090% | 6 ppm |
| NO_{X} | 0.0300% | 0.0265% | 20 ppm | 20 ppm |
| NH₃ | | 0.0269% | | |
| Flow kNm³/h | 932 | 1054 | 1051 | 1037 |

**Table 5**

| | 4 | 11 | 17 | 21 |
|---|---|---|---|---|
| O₂ | 3.63% | 4.74% | 4.60% | 4.63% |
| H₂O | 5.79% | 5.71% | 5.75% | 5.42% |
| CO₂ | 14.47% | 13.42% | 13.44% | 13.53% |
| SO₂ | 0.3134% | 0.288% | 0.0042% | 42 ppm |
| SO₃ | | 0.0050% | 0.284% | |
| H₂SO₄ | 0.0050% | | 0.0050% | 4 ppm |
| NO_{X} | 0.0300% | 0.0276% | 20 ppm | 20 ppm |
| NH₃ | | 0.0279% | | |
| Flow kNm³/h | 932 | 1013 | 1012 | 1005 |

**Table 6**

| | 4 | 11 | 17 | 21 |
|---|---|---|---|---|
| O₂ | 3.63% | 5.08% | 4.80% | 4.86% |
| H₂O | 5.79% | 5.66% | 5.71% | 5.06% |
| CO₂ | 14.47% | 12.80% | 12.84% | 13.00% |
| SO₂ | 0.3140% | 0.590% | 0.0080% | 84 ppm |
| SO₃ | | 0.0050% | 0.579% | |
| H₂SO₄ | 0.0050% | | 0.0090% | 7 ppm |
| NO_{X} | 0.0300% | 0.0265% | 20 ppm | 20 ppm |
| NH₃ | | 0.0269% | | |
| Flow kNm³/h | 932 | 1054 | 1051 | 1037 |

**Table 7**

| | Case 1 | Case 2 | Case 3 | Case 4 |
|---|---|---|---|---|
| Support fuel H₂S (kg/h) | 12000 | 5000 | | 5000 |
| Support fuel CH₄ (kg/h) | | | 800 | |
| T₂ °C | 205 | 205 | 200 | 215 |
| T₈ °C | 278 | 355 | 375 | 355 |
| T₁₁ °C | 391 | 387 | 388 | 386 |
| T₁₉ °C | 250 | 240 | 227 | 240 |
| T₂₁ °C | 102 | 102 | | 102 |

## Claims

1. Process for removal of SOx in flue gas from a boiler (1) comprising the steps of
(a) heating the flue gas upstream a catalytic reactor (11) by heat exchange with a hot heat transfer medium;
(b) oxidizing SO₂ in the flue gas to SO₃ in said catalytic reactor with at least one catalyst pass operating at temperatures in the range of 350-450 °C ;
(c) cooling the oxidized, SO₃-rich flue gas from step (b) to a temperature above the H₂SO₄ dew point of the flue gas by heat exchange with a heat transfer medium providing said hot heat transfer medium;
(d) further cooling the SO₃-rich flue gas (19) from step (c) in an air cooled condenser (20) thereby condensing said SO₃ as H₂SO₄ and producing hot air and a gas (21) containing less than 150 ppmv SO2 or SO3 or a combination of both and less than 30 ppmv NO or NO2 or a combination of both;
(e) withdrawing the condensed H₂SO₄ from the condenser;
wherein the temperature of the flue gas in step (c) is controlled by cooling the flue gas in a heat exchanger (18) via heat exchange with heat transfer medium being a split stream of the boiler feed water for the boiler at a pressure above 60 bar, and in which the inlet temperature of the pressurized water to said heat exchanger is above the H₂SO₄ dew point of the gas.

2. Process according to claim 1, wherein the pressurized water is at a pressure of 100-250 bar and the inlet temperature of the pressurized water to the heat exchanger is 15-30°C above said dew point.

3. Process according to claim 1 or 2, wherein the SO₂ in the flue gas is oxidized in two or more catalyst passes where the flue gas is cooled between the passes by heat exchange with the stream or part of the stream of pressurized water used for cooling the SO₃-rich flue gas according to step (c).

4. Process according to any of claims 1 to 3, wherein the flue gas is heated upstream the catalytic reactor by combustion of support fuel.

5. Process according to any of claims 1 to 3, wherein the flue gas is heated upstream the catalytic reactor by heat exchange with super heated steam from the boiler.

6. Process according to any of claims 1 to 5, wherein the flue gas is heated upstream the catalytic reactor by heat exchange with the SO₃-rich flue gas exiting the catalytic reactor.

7. Process according to claim 4 or 6 dependent on claim 4, in which the combustion air for the combustion of support fuel is heated by heat exchange with the stream or part of the stream of pressurized water.

8. Process according to any of claims 1 to 7 wherein the stream of pressurized water is a fraction constituting 10-50% of the stream of boiler feed water for the boiler, said fraction of boiler feed water being returned to the boiler after having passed through the SOx removal process.

9. Process according to any of claims 1 to 8 wherein a catalyst for selective reduction (SCR) of NOx in the flue gas is conducted upstream the catalyst for oxidation of SO₂, and ammonia or a chemical generating ammonia is injected in the flue gas upstream the SCR catalyst.

## Patentansprüche

1. Verfahren zur Entfernung von SOx im Abgas aus einem Kessel (1), umfassend die Schritte
(a) Erhitzen des Abgases stromaufwärts eines katalytischen Reaktors (11) durch Wärmeaustausch mit einem heißen Wärmeübertragungsmedium;
(b) Oxidieren von SO₂ im Abgas zu SO₃ in dem katalytischen Reaktor mit mindestens einem Katalysator-Durchgang bei Temperaturen im Bereich von 350-450°C;
(c) Abkühlen des oxidierten SO₃-reichen Abgases aus Schritt (b) auf eine Temperatur oberhalb des H₂SO₄-Taupunkts des Abgases durch Wärmeaustausch mit einem Wärmeübertragungsmedium, wobei das heiße Wärmeübertragungsmedium bereitgestellt wird;
(d) weitere Abkühlung des SO₃-reichen Abgases (19) aus Schritt (c) in einem luftgekühlten Kondensator (20), wobei SO₃ als H₂SO₄ kondensiert und Heißluft und ein Gas (21), enthaltend weniger als 150 ppmv SO₂ oder SO₃ oder eine Kombination von beiden und weniger als 30 ppmv NO oder NO₂ oder eine Kombination von beiden, erzeugt werden;
(e) Abziehen der kondensierten H₂SO₄ aus dem Kondensator;
wobei die Temperatur des Abgases in Schritt (c) durch Kühlen des Abgases in einem Wärmetauscher (18) durch Wärmeaustausch mit einem Wärmeübertragungsmedium, welches ein Teilstrom des bei einem Druck über 60 bar in den Kessel eingespeisten Wassers für den Kessel ist, und bei dem die Eintrittstemperatur des Druckwassers in den Wärmetauscher über dem H₂SO₄-Taupunkt des Gases liegt, gesteuert wird.

2. Verfahren gemäß Anspruch 1, wobei das Druckwasser einen Druck von 100-250 bar hat und die Eintrittstemperatur des Druckwassers in den Wärmetauscher 15-30°C über dem Taupunkt liegt.

3. Verfahren gemäß Anspruch 1 oder 2, wobei das SO₂ in dem Abgas in zwei oder mehreren Katalysator-Durchgängen oxidiert wird, wobei das Abgas zwischen den Durchgängen durch den Wärmeaustausch mit dem Strom oder einem Teil des Stroms des Druckwassers, das zum Kühlen von SO₃-reichem Abgas gemäß Schritt (c) verwendet wird, gekühlt wird.

4. Verfahren gemäß einem der Ansprüche 1 bis 3, wobei das Abgas durch Verbrennung eines Hilfsbrennstoffs stromaufwärts des katalytischen Reaktors erhitzt wird.

5. Verfahren gemäß einem der Ansprüche 1 bis 3, wobei das Abgas stromaufwärts des katalytischen Reaktors durch Wärmeaustausch mit überhitztem Dampf aus dem Kessel erhitzt wird.

6. Verfahren gemäß einem der Ansprüche 1 bis 5, wobei das Abgas stromaufwärts des katalytischen Reaktors durch Wärmeaustausch mit aus dem katalytischen Reaktor austretenden SO₃-reichen Abgas erhitzt wird.

7. Verfahren gemäß ein Anspruch 4 oder 6 abhängig von Anspruch 4, bei dem die Verbrennungsluft für die Verbrennung des Hilfsbrennstoffs durch Wärmeaustausch mit dem Strom oder einem Teil des Stroms des Druckwassers erhitzt wird.

8. Verfahren gemäß einem der Ansprüche 1 bis 7, wobei der Strom des Druckwassers ein Anteil ist, welcher 10-50% des Stroms des Kesselspeisewassers für den Kessel ausmacht, wobei der Anteil des Kesselspeisewassers nach Durchlauf des SOx-Entfernungsprozesses in den Kessel zurückgeführt wird.

9. Verfahren gemäß einem der Ansprüche 1 bis 8, wobei ein Katalysator zur selektiven Reduktion (SCR) von NOx im Abgas stromaufwärts des Katalysators zur Oxidation von SO₂ betrieben wird, und Ammoniak oder eine Ammoniak erzeugende Chemikalie im Abgas stromaufwärts des SCR-Katalysator eingespritzt wird.

## Revendications

1. Procédé pour l'élimination de SOx dans un gaz de combustion issu d'une chaudière (1) comprenant les étapes:
(a) chauffer le gaz de combustion en amont d'un réacteur catalytique (11) par échange de chaleur avec un milieu caloporteur chaud;
(b) oxyder le SO₂ dans le gaz de combustion en SO₃ dans ledit réacteur catalytique avec au moins un passage de catalyseur agissant à des températures dans la gamme de 350 à 450°C;
(c) refroidir le gaz de combustion oxydé riche en SO₃ issu de l'étape (b) jusqu'à une température supérieure au point de rosée du H₂SO₄ du gaz de combustion par échange de chaleur avec un milieu caloporteur fournissant ledit milieu caloporteur chaud;
(d) poursuivre le refroidissement du gaz de combustion riche en SO₃ (19) issu de l'étape (c) dans un condenseur à refroidissement par air (20), condensant de ce fait ledit SO₃ en H₂SO₄ et produisant de l'air chaud et un gaz (21) contenant moins de 150 ppmv de SO₂ ou de SO₃ ou d'une combinaison des deux et moins de 30 ppmv de NO ou de NO₂ ou d'une combinaison des deux;
(e) extraire le H₂SO₄ condensé issu du condenseur;
dans lequel la température du gaz de combustion dans l'étape (c) est régulée en refroidissant le gaz de combustion dans un échangeur de chaleur (18) par l'intermédiaire d'un échange de chaleur, le milieu caloporteur étant un courant divisé de l'eau d'alimentation de la chaudière pour la chaudière à une pression supérieure à 60 bars, et dans lequel la température d'entrée de l'eau sous pression dans ledit échangeur de chaleur est supérieure au point de rosée du H₂SO₄ du gaz.

2. Procédé selon la revendication 1, dans lequel l'eau sous pression est à une pression de 100 à 250 bars et la température d'entrée de l'eau sous pression dans l'échangeur de chaleur est de 15 à 30°C au-dessus dudit point de rosée.

3. Procédé selon la revendication 1 ou 2, dans lequel le SO₂ dans le gaz de combustion est oxydé en deux passages de catalyseur ou plus dans lesquels le gaz de combustion est refroidi entre les passages par échange de chaleur avec le courant ou une partie du courant d'eau sous pression utilisé pour refroidir le gaz de combustion riche en SO₃ selon l'étape (c).

4. Procédé selon l'une quelconque des revendications 1 à 3, dans lequel le gaz de combustion est chauffé en amont du réacteur catalytique par combustion d'un combustible de support.

5. Procédé selon l'une quelconque des revendications 1 à 3, dans lequel le gaz de combustion est chauffé en amont du réacteur catalytique par échange de chaleur avec de la vapeur surchauffée issue de la chaudière.

6. Procédé selon l'une quelconque des revendications 1 à 5, dans lequel le gaz de combustion est chauffé en amont du réacteur catalytique par échange de chaleur avec le gaz de combustion riche en SO₃ quittant le réacteur catalytique.

7. Procédé selon la revendication 4 ou 6 dépendant de la revendication 4, dans lequel l'air de combustion pour la combustion du combustible de support est chauffé par échange de chaleur avec le courant ou une partie du courant d'eau sous pression.

8. Procédé selon l'une quelconque des revendications 1 à 7, dans lequel le courant d'eau sous pression est une fraction constituant de 10 à 50 % du courant d'eau d'alimentation de la chaudière pour la chaudière, ladite fraction d'eau d'alimentation de la chaudière étant renvoyée vers la chaudière après être passée par le procédé d'élimination de SOx.

9. Procédé selon l'une quelconque des revendications 1 à 8, dans lequel un catalyseur pour la réduction sélective (SCR) de NOx dans le gaz de combustion est amené en amont du catalyseur pour l'oxydation du SO₂, et de l'ammoniac ou un produit chimique engendrant de l'ammoniac est injecté dans le gaz de combustion en amont du catalyseur SCR.
